Europäisches Patentamt

European Patent Office

Office européen des brevets

(11) Publication number: **0 435 582 A2**

# EUROPEAN PATENT APPLICATION

(21) Application number: **90314041.6**

(51) Int. Cl.⁵: **H04Q 7/02**

(22) Date of filing: **20.12.90**

(30) Priority: **29.12.89 US 458912**

(43) Date of publication of application:
**03.07.91 Bulletin 91/27**

(84) Designated Contracting States:
**AT BE CH DE DK ES FR GB IT LI LU NL SE**

(71) Applicant: **MOTOROLA, INC.**
**1303 East Algonquin Road**
**Schaumburg, IL 60196(US)**

(72) Inventor: **Densmoor, Michael S.**
**631 Widgoen Drive**
**No. 301 Wheeling Illinois 60090(US)**

Inventor: **Lohrbach, Jeffrey**
**1108 Duncan Avenue**
**Elgin, Illinois 60120(US)**
Inventor: **Butler, James**
**2 Phillippi Creek Drive**
**Elgin, Illinois 60120(US)**

(74) Representative: **Dunlop, Hugh Christopher et al**
**Motorola European Intellectual Property Operations Jays Close Viables Industrial Estate**
**Basingstoke, Hampshire RG22 4PD(GB)**

(54) **Supervisory control allocation method and apparatus.**

(57) A communication system comprising a plurality of consoles and a plurality of communication resources wherein supervisory controls are assignable to the consoles. The supervisory controls comprise primary and secondary functions. A system manager, which may be a designated console or a computer-aided dispatching device, assigns primary and secondary functions to the consoles. The system manager may enable or disable a console from selecting its own default supervisory controls.

FIG.1

EP 0 435 582 A2

## SUPERVISORY CONTROL ALLOCATION METHOD AND APPARATUS

TECHNICAL FIELD

This invention relates generally to communication systems and in particular to assigning supervisory controls, on a per function basis, to a plurality of consoles within a communication system.

BACKGROUND OF THE INVENTION

A typical communications system, such as a trunked or conventional communication system, comprises a communication resource allocator, a supervisory console, a plurality of communication resources, a plurality of consoles, and a plurality of communication units. Generally, the plurality of communication units, which may be mobile vehicle units or portable personal units, are arranged into related groups. For example, communication units operated by a city's police force may form one group, while communication unit operated by the city's fire department, dog· catcher units, highway crews, and civil engineers may form other groups. The groups may be further divided into sub-groups, for example, the police group may be divided by districts such as Police 1, Police 2, etc. (For trunked communication systems, groups of communication units are arranged in fleets and/or sub-fleets; for conventional communication systems, groups of communication units are affiliated with at least one particular communication resource.)

The plurality of consoles, which may be devices as defined in Motorola, Inc., publication no. R4-2-37C, March, 1988, entitled *System Planner*, or similar devices, supervise the groups and subgroups of communication units. Typically, each console is designed to perform supervisory controls such as resetting emergency conditions, assigning call patches, and transmitting at a second priority level. Resetting emergency conditions consists of answering an emergency call, resetting audio and/or visual emergency call indicators, and deassigning auto call patches. (An auto call patch is a predetermined linking of groups which is automatically executed when a predetermined situation arises.) Of the plurality of the consoles, one console is preselected as the supervisory console which has additional supervisory controls such as resetting the communication system clock, disabling consoles, disabling communication resources, and transmitting at a first priority level. (The first priority level is considered to be the highest transmitting level, and the second priority level is a higher transmitting priority than that of a communication unit.)

When a condition within a group or sub-group of communication units arises that requires a supervisory control to be performed, any of the consoles may respond to the condition, unless that console has been disabled by the supervisory console. In practice, operators of consoles are assigned to at least one particular group or sub-group, however, this assignment is human generated and requires operator discipline to maintain. Operator discipline may be defined as human allocation of responsibilities for supervisory controls to operators of consoles such that all groups are monitored by at least one operator with little redundancy of responsibilities. For example, if an emergency call is initiated by a communication unit in sub-group Police 1, the operator responsible for Police 1 performs the necessary emergency supervisory controls such as answering the emergency, disabling emergency indicators, etc. If, however, the operator responsible for Police 1 is unable to respond to the emergency, confusion between the remaining operators may result in regard to who should respond to the emergency. Several possible scenarios may result from the confusion such as the emergency does not get responded to in a reasonable time frame or several operators respond to the emergency in conflicting manners. Thus, if confusion occurs between the remaining operators, an emergency call may not be properly responded to.

The selection of a supervisory console from the plurality of consoles is generally fixed, i.e., to change supervisory consoles, the communication system must be shut down. Thus to select a new supervisory console, the communication system must be shut down and supervisory console controls activated in the new supervisory console and deactivated in the old supervisory console. Because any of the plurality of consoles may be the supervisory console, each console must have the necessary software and hardware to process the supervisory control controls. In all but the supervisory console, the supervisory console control software and hardware is disabled.

A need exists for a communication system, in particular, a method and apparatus for assigning supervisory controls, on a per function per communication resource basis, to individual consoles, for substantially eliminating a requirement for operator discipline, and for reassigning supervisory controls without having to shut down the communication system.

SUMMARY OF THE INVENTION

These needs and others are substantially met by the supervisory control allocation method and apparatus disclosed herein. In a communication system, individual supervisory controls may be assigned to a predetermined number of consoles within the communication system to produce assigned supervisory controls. Whenever a predetermined condition occurs, at least one of the assigned supervisory controls may be reassigned to at least one of the consoles with negligible effects on the operation of the communication system.

In an embodiment of the present invention, a communication system, such as a trunked or conventional communication system, assigns default supervisory controls to at least some of the consoles whenever a default condition occurs. The default supervisory control assignments are stored in a reprogrammable memory device such as an electronically erasable programmable read only memory (EEPROM) device.

In another embodiment of the present invention, a managerial terminal, such as a designated console, a console management terminal (CMT), or a computer aided dispatching (CAD) device, individually assigns supervisory controls to the predetermined number of consoles, where the predetermined number is one. The supervisory controls comprise primary functions and secondary functions which may be assigned and reassigned with negligible affects on the operation of the communication system.

BRIEF DESCRIPTION OF THE DRAWINGS

Figure 1 illustrates a conventional communication system having a computer-aided dispatching (CAD) device that assigns and may reassign supervisory communication resource controls to a plurality of consoles according to the present invention.

Figure 2 illustrates a trunked communication system having a computer-aided dispatching (CAD) device that assigns and may reassign supervisory communication resource controls to a plurality of consoles according to the present invention.

BEST MODE FOR CARRYING OUT THE INVENTION

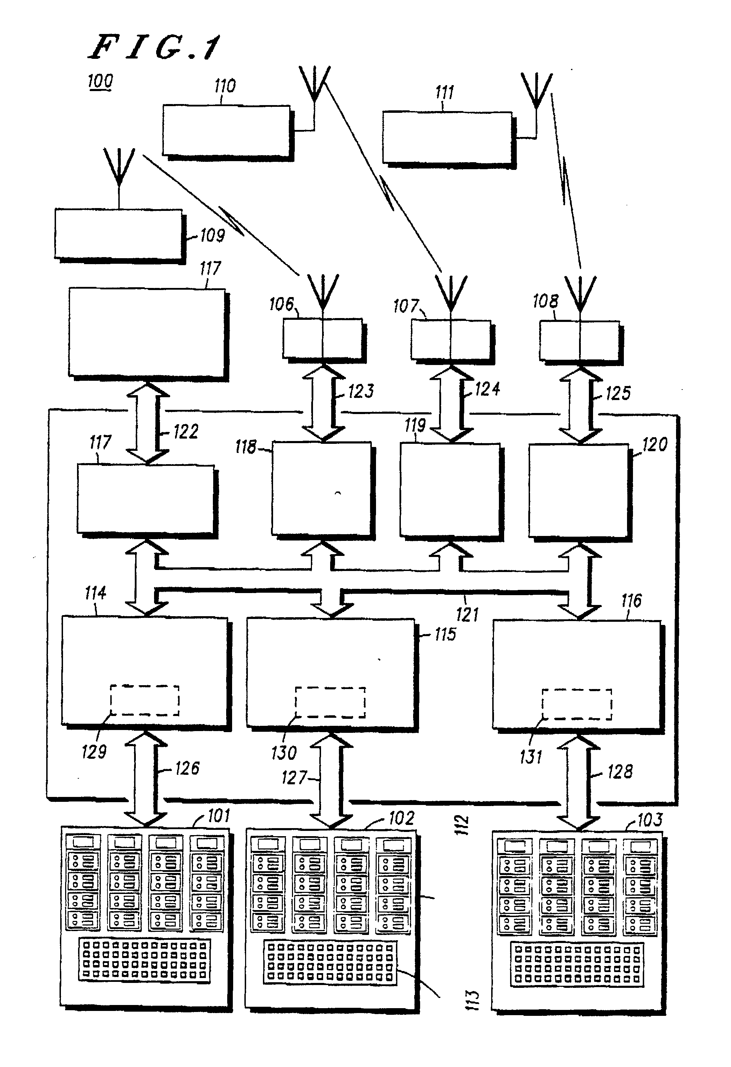

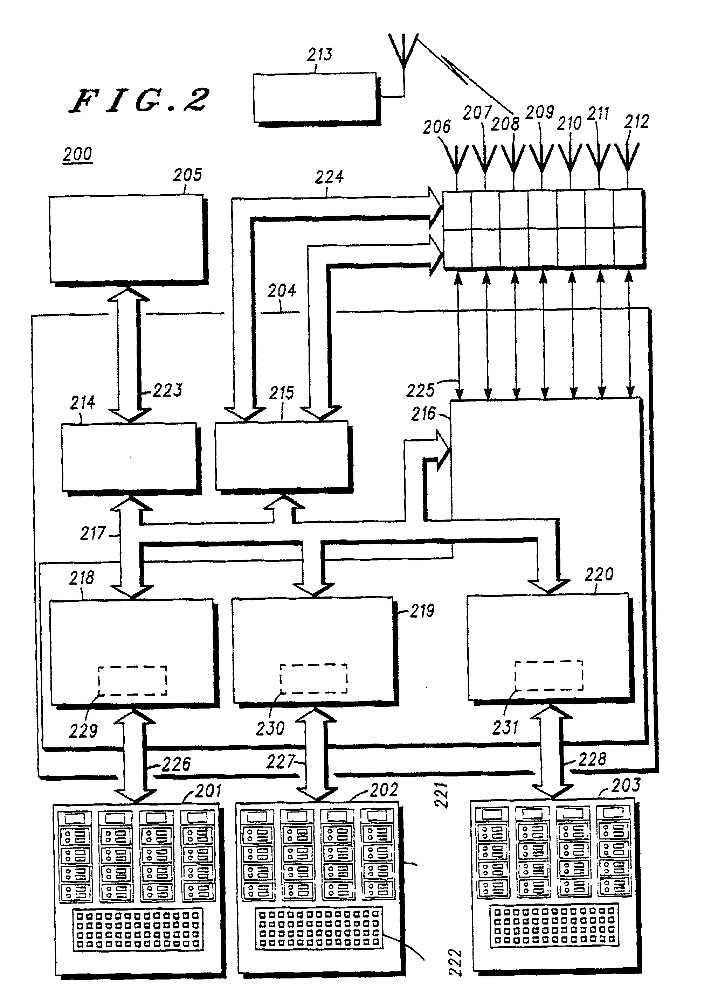

Figures 1 and 2 illustrate a conventional communication system (100) and a trunked communication system (200), respectively. The present invention is contemplated to work equally well for either a conventional or a trunked communication system, thus, the following discussion is equally directed toward both types of communication systems. When a difference of implementation occurs, the functionality will be described with respect to each type of communication system.

The conventional communication system (100) of figure 1 comprising a plurality of consoles (101-103), a communication resource allocator (104) (typically, a central electronics bank (CEB)), a CAD device or CMT (105), a plurality of communication resources (106-108), and a plurality of communication units (109-111). The consoles (101-103) comprise a plurality of control channel modules (CCM) (112) and a keypad (113). The communication resource allocator (104) comprises a plurality of operator's mux interfaces (OMI) (114-116), a CAD interface MUX interface (CIMI) (117), a plurality of base interface modules (BIM) (118-120), and a data bus (121). The CAD or CMT (105), is linked to the CIMI (117) by a data interface (122). The plurality of communication resources (106-107) are linked to the BIMs (118-120) by data links (123-125). The consoles (101-103) are linked to the OMIs (114-116) by data links (126-128). The OMIs (114-116) comprise a reprogrammable memory device (129-131), such as an electronically erasable programmable read-only memory device (EEPROM). Refer to U.S. Patent No. 4,698,805 assigned to Motorola, Inc., for a general description of a conventional communication system's (100) operation.

The trunked communication system (200) of figure 2 comprises a plurality of consoles (201-203), a communication resource allocator (204), a CAD device or CMT (205), a plurality of communication resources (206-212), and a communication unit (213). The communication resource allocator (204) comprises a CIMI (214), a communication resource central (215), a console network (216) and a data bus (217). The console network (216) comprises a plurality of trunking operator mux interfaces (TOMI) (218-220). Each of the plurality of consoles (201-203) comprise a plurality of control channel modules (CCM) (221) and a keypad (222). Each of the TOMIs (218-220) comprise a reprogrammable memory device (229-231) such as an electronically erasable programmable read only memory (EEPROM) device. The CAD or CMT (205) is connected to the CIMI (214) by a data link (223). The plurality of communication resources (206-212) are connected to the communication resource center (215) and the console network (216) by communication data links (224 and 225), respectively. The plurality of consoles (201-203) are connected to the TOMIs (218-220) by data links (226-228). Refer to U.S. Patent No. 4,698,805 assigned to Motorola, Inc, for a general description of a trunked communication system's (200) operation.

Generally, a system manager, operating a managerial terminal, individually assigns, or individually reassigns, supervisory controls to any or all of the consoles (101-103, or 201-203) with negligible effects on the communication system's operation.

The supervisory controls comprise primary and secondary functions, where primary functions comprise resetting emergencies, indication of emergencies, indication of priority groups, deassigning auto call patching, transmitting at a first priority level, and deactivating emergency indications and second functions comprise transmitting at a second priority level. The system manger may enable or disable any console's ability to modify, on a per group basis, which groups its monitoring. If modification is enabled, any group monitoring change by the console will result in the console having default supervisory controls over that group. The default supervisory controls are stored in the communication resource allocator (104 or 204) and will be discussed below. However the primary and secondary functions are assigned to the consoles, the system manager monitors all assignments such that the system manager may ensure that all supervisory controls are assigned to at least one console.

The system manager, with consoles' default selection disabled, may assign primary and secondary functions to individual consoles on a per function basis. For example, the system manager may assign all primary functions for a particular group of communication units to a predetermined number of consoles, which may be any number, but, is presently contemplated to be one. Having all the primary functions for a group assigned to one console, only one operator is responsible for that group, thus the need for operator discipline is substantially reduced. The system manager may also, for example, assign a particular primary function (e.g. emergency reset) for all groups to an individual console, such that one operator is responsible for performing a particular function. From these brief examples, it's clear that the system manager has a great deal of flexibility to configure supervisory control responsibilities as he chooses.

The managerial terminal used by the system manager may be a CAD device, or a CMT, (105 or 205) or a designated console. The designated console may be any of the plurality of consoles (101-103, or 201-203) that is equipped with managerial software and hardware. (The managerial software performs the functions of the present invention described herein.) If a designated console is used as the managerial terminal, it may assign supervisory controls to itself as well as to other consoles (101-103, or 201-203). Nevertheless, the present embodiment contemplates using a CAD device or a CMT (105 or 205) as the managerial terminal. Where a CAD device or a CMT (105, or 205) is a remote data node, such as a computer, equipped with the managerial software which is capable of programming supervisory control configurations into a communication system.

The system manager may reassign supervisory controls (primary and/or secondary functions) whenever a predetermined condition occurs. A predetermined condition may be any event that might require a change of supervisory control responsibilities, such as a shift change (day shift, night shift, or weekend shift), an operator's break, a disaster plan, a hard or soft failure of a console, or any desired reconfiguration based on user needs. (A hard console failure occurs when the console is no longer usable due to a failure of a related component such as an OMI or TOMI, a soft console failure is a temporary interruption of use due to a glitch in a related component.) When such a condition occurs, the system manager may enter reassignments for some or all of the consoles with negligible effects on the operation of the communication system and on the operation of the consoles. When primary functions are being reassigned, the new assignment is made before the old assignment is deleted, such that all primary functions are always assigned to at least one console. During the reassignment process, there is short time (about 15 seconds for manual reassignments, about 5 seconds for automatic reassignments) when redundant responsibility occurs. Under these conditions, some operator discipline is required to ensure that all primary functions are responded to properly.

If the system manager, upon a predetermined condition, reassigns a primary function that is actively being executed, the reassignment may not be completed until the execution of the primary function is finished. For example, if a console is actively involved in an emergency call or transmitting at the first priority level, the console will not relinquish responsibility for an emergency or reduce its transmit priority until its finished executing theses functions. The console will acknowledge the reassignment request to inform the system manager that the reassignment has not been executed. However, this does not preclude changing other supervisory controls of that console or changing supervisory controls of other consoles. Thus, even though one console may be actively involved in an emergency call when a reassignment request is entered, the console reassigned responsibility for emergency calls executes the reassignment such that both consoles share responsibility for the emergency call. Under these conditions, operator discipline is required to ensure that the emergency is handled properly.

All other supervisory controls (excluding emergency calls and transmitting at the first priority level) will be executed by the consoles when the reassignment is entered by the system manager. The system manager may upgrade secondary functions to primary functions or reassign supervisory controls to another console. For example, the system manager may upgrade a level 2 transmit priority to a level 1 transmit priority when a console is transmitting, but, the reverse cannot be done. In addition, the system manager may assign any supervisory controls (including emergency calls and transmitting at the first priority level) to a console that was not previously assigned these supervisory controls. Thus, a console that was not assigned to a group may be assigned a first or second priority level transmit during an emergency call.

Assignment and reassignment of supervisory controls (primary and/or secondary functions) may be made with negligible affects on the operation of the communication system. The system manager, via the managerial terminal, may assign and reassign supervisory controls dynamically, i.e., little, if any, interruption of calls or of supervisory control execution occurs. Each console and related interfacing devices are equipped with software to receive assignments and reassignments without interrupting its operation. Thus, changing supervisory controls does not interrupt operation of the communication system or the operation of each console.

As mentioned above, a console may be assigned default supervisory controls whenever a default condition occurs or the system manager enables the consoles default selection means. Where the default selections means is a software triggering mechanism that allows, when activated, the console to be assigned its default supervisory controls. A default condition may be, for example, a sort console related device failure that automatically or manually resets, where a related interfacing device may be an OMI (114-116), or a TOMI (218-220). The default supervisory controls are also preassignment conditions, i.e., they are automatically assigned when the console is first activated. Further, the default supervisory control assignments are predetermined and stored in a reprogrammable memory device (129-131, or 229-231) and may be altered by reprogramming the EEPROMs (129-131). If it is desired to have the default supervisory communication resource control assignments fixed, the reprogrammable memory device (129-131, or 229-231) may be replaced with a read only memory device.

As an illustrative example of the present invention, the system manger, utilizing the CAD or CMT (105), assigns console #1 (101) all primary functions for the first communication resource (106) and secondary functions for the second communication resource (107). [For the trunked communication system (200), the system manager would assign primary functions based on fleets and/or subfleets.] Console #1 (101), and only console #1 (101), is responsible for processing all primary functions that occur on the first communication resource (106). A priority group indication may be displayed on a CCM (112) of the console #1 (101) which indicates the group console #1 (101) is responsible for. The system manager may, for whatever reason, not allow an indication of the group to be displayed on the console; but, in any event, the system manager controls priority group indicators for each console. The priority group indication may be a symbol in conjunction with the group code or alias; for example: "*0D11", or "*Police 1", where the "*" indicates the priority.

If a predetermined conditions occurs, such as changing to a night shift configuration, the system manager may further assign to console #1 (101) first priority transmit level and emergency reset (primary functions) for communication resource #2 (107). An indication of these responsibilities may appear on a CCM (112) such that the operator is aware of his new responsibilities. If the reassignment was attempted during an emergency call on communication resource #2 (107), the console having primary function responsibility for communication resource #2 (1 07) would not relinquish its emergency call responsibility until the emergency had ended. Although, once the reassignment was entered, console #1 (101) would share the emergency call responsibility with the above mentioned console.

If console #1 (101) experiences a soft failure and automatically or manually resets, console #1 (1 01 ) would automatically be assigned its default supervisory controls upon resetting. The system manager, as mentioned, monitors all assignments such that when console #1 (101) fails, the system manager is alerted and, if he desires, may reassign console #1's (101) supervisory controls to other consoles. Once console #1 (1 01 ) resets, it assumes its default supervisory controls which may result in shared responsibilities with other consoles. Again, the system manager is alerted when console #1 (101) assumes its default supervisory controls and may reassign the supervisory controls to eliminate the redundancy of responsibilities. Thus, a failure and resetting of a console may be considered a default condition with respect to a console and a predetermined condition with respect to the system manager.

From the above discussion, it is apparent that the supervisory controls may be distributed among the consoles (101-103, or 201-203) in a variety of configurations. By having a system manager and associated software, the supervisory controls may be assigned with negligible affects on the operation of the communication system. Further, the system manager allows the responsibilities for supervisory controls to be distributed among several operators and responsibilities to be changed whenever a predetermined condition occurs.

**Claims**

1. In a communication system having at least:
   a plurality of communication resources; and
   a plurality of consoles;
   a method for allocating supervisory controls on a per function basis to the plurality of consoles comprising the steps of:
   a) assigning, with negligible effects on operation of the communication system, individual supervisory consoles of the supervisory controls to a predetermined number of the plurality of consoles to produce assigned supervisory controls; and
   b) reassigning, with negligible effects on the operation of the communication system, at least one of the assigned supervisory controls to at least one of the plurality of consoles whenever a predetermined condition occurs.

2. The method of claim 1 further comprising the step of:

   displaying on individual consoles of the plurality of consoles an indication of a priority group that is assigned to the individual consoles of the plurality of consoles.

3. The method of claim 1 wherein step (a) and step (b) further comprise:

   assigning, by a managerial terminal, primary functions of the supervisory controls to the predetermined number of the plurality of consoles to produce assigned primary functions; and

   reassigning, by the managerial terminal, at least one of the assigned primary functions to the at least one of the plurality of consoles.

4. The method of claim 3 further comprises the step of:

   assigning by one of the plurality of consoles default supervisory controls to the one of the plurality of consoles whenever the managerial terminal enables default selection of the one of the plurality of consoles.

5. The method of claim 1 further comprising the step of:

   assigning, with negligible affects on the operation of the communication system, default supervisory controls to a console of the plurality of consoles whenever the console detects a default condition.

6. A communication system comprising:

   a plurality of consoles;

   a plurality of communication resources;

   communication resource allocation means, operably associated with the plurality of consoles and the plurality of communication resources, for coupling at least some of the plurality of consoles to at least some of the plurality of communication resources; and

   managerial terminal means, operably associated with the plurality of consoles and the communication resource allocation means, for individually assigning supervisory controls to a predetermined number of the plurality of consoles and for individually reassigning at least some of the supervisory controls to at least one of the plurality of consoles whenever a predetermined condition occurs.

7. The communication system of claim 6 wherein the supervisory controls comprise primary functions and secondary functions.

8. The communication system of claim 7 wherein the primary functions comprise emergency reset, emergency indication, priority group indication, priority transmission, and enablement of group modification ability.

9. The communication system of claim 8 wherein the emergency reset comprises answering an emergency call, deassigning auto call patching, deleting the emergency call, and deactivating the emergency indication.

10. The communication system of claim 6 wherein the managerial terminal means comprises a designated console.

11. The communication system of claim 6 wherein the managerial terminal means comprises a computer aided dispatching device.

12. The communication system of claim 6 wherein the communication resource allocation means further comprises default means, operably associated with the plurality of communication resource control modules, for assigning default resource controls whenever a default condition occurs.

13. The communication system of claim 12 wherein the default means comprises reprogrammable memory device.

# F I G . 1

FIG.2